# EUROPÄISCHE PATENTSCHRIFT

(11) **EP 2 466 273 B1**
(45) Veröffentlichungstag und Bekanntmachung des Hinweises auf die Patenterteilung: **25.02.2015**
(21) Anmeldenummer: 11009574.2
(22) Anmeldetag: 03.12.2011
(51) Int. Cl.: G01D 21/00

(54) **Aufnahme für einen Langzeit-Energiespeicher eines Encoders**
Holder for a long-term energy storage system of an encoder
Réception pour un accumulateur d'énergie longue durée d'un encodeur

(30) Priorität: 16.12.2010 DE 102010056038
(43) Veröffentlichungstag der Anmeldung: 20.06.2012
(73) Patentinhaber: STÖBER ANTRIEBSTECHNIK GmbH & Co., D-75177 Pforzheim (DE)
(72) Erfinder: Thalhammer, Stefan, 82065 Baierbrunn (DE); Scholze, Stephan, 75305 Neuenbürg (DE)
(74) Vertreter: Jackisch-Kohl, Anna-Katharina

(56) Entgegenhaltungen:
- EP-A1- 2 105 713
- DE-A1-102008 055 687

## Beschreibung

Die Erfindung betrifft eine Aufnahme für einen Langzeit-Energiespeicher eines Encoders nach dem Oberbegriff des Anspruches 1.

Es sind mechanische Multiturn-Drehgeber bekannt, bei denen mehrere Winkelcodierscheiben über ein Untersetzungsgetriebe miteinander verbunden sind. Die jeweils nachgeschaltete Winkelcodierscheibe wird nach einer Umdrehung der vorgeschalteten Winkelcodierscheibe um eine ihrem Auflösungsvermögen entsprechende Einheit gedreht. Entsprechend der Anzahl der Codierscheiben vervielfacht sich die Anzahl der Abtastsysteme. Solche Drehgeber sind aufwändig und damit teuer. Das mechanische Untersetzungsgetriebe ist nicht verschleißfrei und erlaubt auch nur begrenzte Drehzahlen.

Es sind auch Multiturn-Drehgeber bekannt, bei denen anstelle eines mechanischen Untersetzungsgetriebes eine zusätzliche Codierscheibe eingesetzt wird, mit der die Zahl der Umdrehungen der Geberwelle erfasst wird. Zur Pufferung der Daten ist ein Akku oder eine Batterie vorgesehen, die im Drehgeber untergebracht ist. Während des Einsatzes des Drehgebers ist der Akku bzw. die Batterie erhöhten Temperaturen und Erschütterungen ausgesetzt, was sich nachteilig auf deren Lebensdauer auswirkt. Durch den Einbau des Akkus bzw. der Batterie in den Drehgeber selbst hat dieser eine entsprechende Baugröße. Dadurch wird insbesondere auch die Montage erschwert.

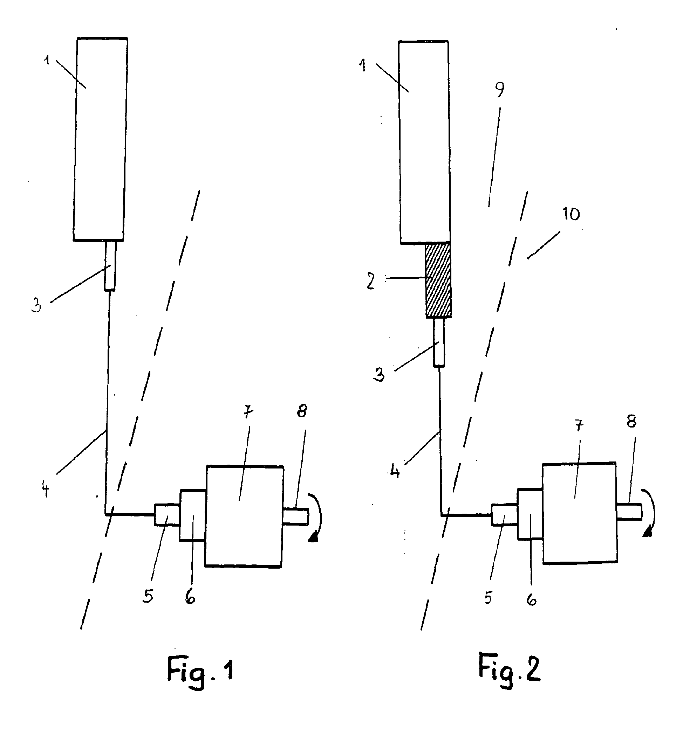

Ein Beispiel der Verbindung eines Drehgebers mit einem Umrichter nach dem Stand der Technik zeigt Fig. 1. Der Umrichter 1 hat einen Encoder-Stecker 3, der über ein Encoder-Kabel 4 mit einem Encoder-Stecker 5 eines Encoders 6 leitungsverbunden ist. Der Encoder 6 ist an einer Last 7 vorgesehen und erfasst die Position einer Motorwelle 8. Die Batterie oder der Akku ist im Encoder 6 untergebracht.

Patentdokument DE 102008055687 A1 zeigt eine Aufnahme für eine Batterie eines Encoders wobei die Batterie aus dem Geber ausgelagert ist. Hier ist die Batterie an einem Kabel angebracht, das zum Beispiel zu einer externen Auswerteinheit bzw. -einrichtung führt.

Patentdokument EP 2105713 A1 zeigt einen Drehgeber, der mit einer externen Gleichspannungswelle verbunden ist, über die er im Normalbetrieb versorgt wird. Für den Fall dass aus irgendeinem Grund die Gleichspannungsquelle nicht zür Verfügung steht, wird der Drehgeber vorübergehend durch eine Batterie mit elektrischer Energie versorgt. Die Batterie kann entweder direkt im Drehgeber oder auch extern in einer Folgeelektronik angeordnet sein.

Der Erfindung liegt die Aufgabe zugrunde, die gattungsgemäße Aufnahme so auszubilden, dass eine einfache Montage bei konstruktiv einfacher Ausbildung möglich ist.

Diese Aufgabe wird bei der gattungsgemäßen Aufnahme erfindungsgemäß mit den kennzeichnenden Merkmalen des Anspruches 1 gelöst.

Die erfindungsgemäße Aufnahme ist als Steckermodul ausgebildet, in deren Gehäuse sich der Langzeit-Energiespeicher befindet. Er ist somit nicht mehr im Encoder selbst untergebracht. Das Steckermodul hat die Umrichter-Schnittstelle, mit der das Steckermodul an einen Umrichter angeschlossen werden kann. Es ist dadurch möglich, bestehende Anlagen nachträglich mit dem Steckermodul auszurüsten. Da der Langzeit-Energiespeicher nicht im Drehgeber untergebracht ist, ist er auch vor schädlichen Einflüssen durch Temperatur, Erschütterungen, Schmutz und dergleichen geschützt. Das Steckermodul selbst erlaubt eine einfache Montage, da es lediglich mit seiner Schnittstelle in die Schnittstelle des Umrichters gesteckt werden muss.

Vorteilhaft ist es, wenn das Steckermodul eine zweite Schnittstelle aufweist, mit der es mit dem Encoder gekoppelt werden kann. Vorteilhaft erfolgt die Koppelung über ein Encoder-Kabel. Bei einer solchen Ausbildung des Steckermoduls können die bestehenden Encoder-Kabel weiterhin verwendet werden.

Es ist auch möglich, dass das Encoder-Kabel fest mit dem Steckermodul verbunden ist. Es wird dann mit seiner Umrichter-Schnittstelle an den Umrichter angeschlossen.

Der Langzeit-Energiespeicher kann eine Batterie oder ein Akku sein.

Das Steckermodul weist vorteilhaft wenigstens einen Kurzzeit-Energiespeicher auf, mit dem beispielsweise im Falle eines Batterieaustausches oder eines Umrichterwechsels die gespeicherten Daten gesichert werden.

Der Langzeit- und der Kurzzeit-Energiespeicher sind vorteilhaft parallel geschaltet.

Bevorzugt wird der Kurzzeit-Energiespeicher durch einen Kondensator, vorzugsweise durch einen Doppelschicht-Kondensator, gebildet. Solche Kondensatoren haben eine lange Lebensdauer, so dass auch über längere Zeiträume hinweg die Pufferwirkung des Kurzzeit-Energiespeichers gewährleistet ist.

Damit das Steckermodul sicher mit dem Umrichter verbunden werden kann, weist es zwei Rändelschrauben auf, mit denen das Steckermodul am Umrichter befestigt werden kann. Mit den Rändelschrauben wird das Steckermodul gegen den Umrichter gezogen, so dass die Umrichter-Schnittstelle des Steckermoduls und die Gegenschnittstelle des Umrichters fest zusammengezogen werden. Dadurch ist eine sichere Verbindung zwischen dem Umrichter und dem Steckermodul gewährleistet.

Bei einer bevorzugten Lösung für eine einfache Montage sind die Rändelschrauben des Steckermoduls mit einem Griffstück versehen, das innerhalb des Steckermoduls angeordnet ist und teilweise aus dem Gehäuse des Steckermoduls ragt. Das Griffstück lässt sich darum sehr einfach mit der Hand betätigen, um das Steckermodul an den Umrichter anzuschließen bzw. von ihm zu lösen.

Die Zugänglichkeit des Griffstückes wird wesentlich verbessert, wenn es über wenigstens zwei, vorzugsweise über drei Gehäuseseiten vorsteht. Dann lässt sich das Griffstück mit der Hand problemlos in der gewünschten Richtung drehen. Werkzeuge zum Drehen des Griffstückes sind nicht erforderlich, so dass eine einfache und rasche Montage des Steckermoduls erreicht wird.

Damit das Griffstück zuverlässig von Hand betätigt werden kann, hat es einen Außendurchmesser, der mindestens doppelt so groß ist wie der Außendurchmesser eines Stiftes, auf dem das Griffstück sitzt und der das Gewinde aufweist. Aufgrund des großen Außendurchmessers ergeben sich optimale Kraftverhältnisse beim Drehen des Griffstückes mit der Hand.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung die Verbindung eines Encoders einer Last mit einem Umrichter nach dem Stand der Technik,
- Fig. 2: in einer Darstellung gemäß Fig. 1 die Verbindung zwischen dem Encoder einer Last und einem Umrichter unter Einsatz eines erfindungsgemäßen Steckermoduls,

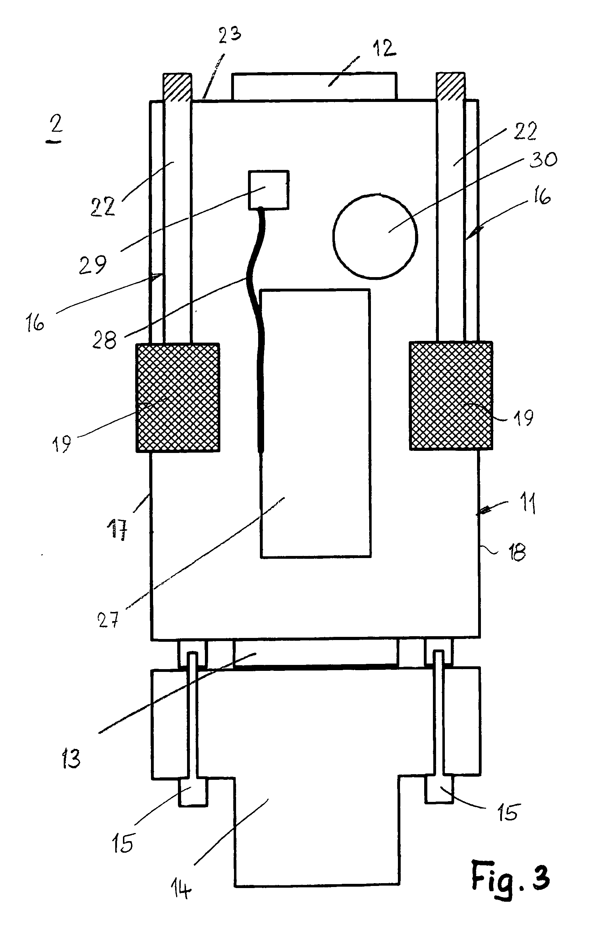

- Fig. 3: eine Draufsicht auf das erfindungsgemäße Steckermodul mit abgenommenem Deckel sowie mit angeschlossenem Encoder-Stecker,
- Fig. 4: eine Schaltung, die ein Auswechseln einer Batterie im Steckermodul ermöglicht, ohne dass gespeicherte Daten des Encoders verloren gehen,
- Fig. 5: eine Stirnansicht des erfindungsgemäßen Steckermoduls,
- Fig. 6: in schematischer Darstellung die Lagerung einer Rändelschraube des erfindungsgemäßen Steckermoduls.

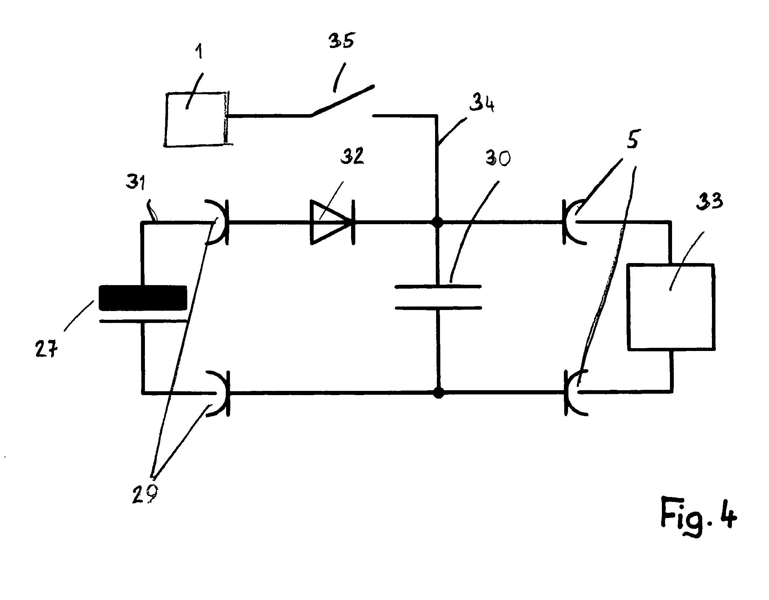

Fig. 2 zeigt einen Umrichter 1, an den ein Steckermodul 2 angeschlossen ist. An das Steckermodul 2 seinerseits ist ein Encoder-Stecker 3 angeschlossen, der über ein Encoder-Kabel 4 mit einem Encoder-Stecker 5 verbunden ist. Er ist mit einem Encoder 6 verbunden, der an einer Last 7, im Ausführungsbeispiel einem Motor, vorgesehen ist. Mit dem Encoder 6 wird in bekannter Weise die Position einer Motorwelle 8 erfasst. Der Encoder 6 ist mit einer Auswerteelektronik 33 (Fig. 4) versehen, die eine Energiepufferung benötigt.

Die Ausbildung des Encoders 6 sowie des Umrichters 1 ist bekannt und wird darum auch nicht näher erläutert.

Der Umrichter 1 und das Steckermodul 2 befinden sich vorteilhaft in einer Schaltschrankumgebung 9, während die Last 7 mit dem Encoder 6 vorteilhaft in einer Motorumgebung 10 untergebracht ist.

Das Steckermodul 2 hat ein Gehäuse 11, das beispielhaft quaderförmig ausgebildet ist. An seinen beiden Schmalseiten stehen über das Gehäuse 11 Kontakte 12, 13 vor, von denen der Kontakt 12 zum Anschluss des Steckermoduls 2 an den Umrichter 1 und der Kontakt 13 zur Verbindung mit dem Encoder-Kabel 4 vorgesehen sind. Es ist zudem auch möglich, beide Kontakte 12, 13 als Buchsen auszubilden oder den einen Kontakt als Buchse und den anderen Kontakt als Stecker zu gestalten.

An den Kontakt 13 ist ein Encoder-Stecker 14 angeschlossen, der an einem Ende des Encoder-Kabels 4 vorgesehen ist. Der Encoder-Stecker 14 wird mit Rändelschrauben 15 in bekannter Weise mit dem Kontakt 13 des Steckermoduls 2 lösbar verbunden.

Auch der Kontakt 12 wird mit Hilfe von Rändelschrauben 16 an den entsprechenden Gegenkontakt des Umrichters 1 lösbar angeschlossen. Im Unterschied zu den Rändelschrauben 15, deren Kopf in bekannter Weise mit einem Schlitz oder einem Innensechskant zur Aufnahme eines Werkzeuges versehen ist, können die Rändelschrauben 16 ohne Zuhilfenahme eines Werkzeuges lediglich mit der Hand zuverlässig betätigt werden.

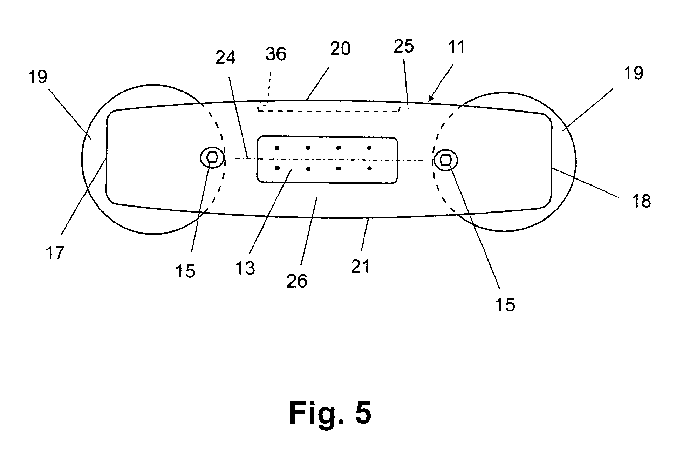

Die Rändelschrauben 16 liegen benachbart zu den Längsseiten 17, 18 im Gehäuse 11 und haben jeweils ein Griffstück 19. Wie Fig. 5 zeigt, stehen die Griffstücke 19 über die Oberseite 20, die Unterseite 21 und die Längsseite 17, 18 des Gehäuses 11 vor. Der Außendurchmesser der Griffstücke 19 ist mindestens doppelt so groß wie der Außendurchmesser von Stiften 22, auf denen die Griffstücke 19 drehfest sitzen. Aufgrund des großen Außendurchmessers lassen sich die Griffstücke 19 somit bequem von Hand drehen, um das Steckermodul 2 an den Anschluss des Umrichters 1 anzuschließen. Um die Griffigkeit zu erhöhen, sind die Griffstücke 19 außenseitig mit einer entsprechenden Profilierung, beispielsweise einer Riffelung, versehen. Die Griffstücke 19 sind so lang, dass sie bequem mit den Fingern bedient werden können.

Die Griffstücke 19 sitzen drehfest auf den Stiften 22, die über die den Kontakt 12 aufweisende Stirnseite 23 des Gehäuses 11 ragen. Die im Gehäuse 11 vorgesehenen Durchtrittsöffnungen für die Griffstücke 19 sind länger als die Griffstücke, so dass diese beim Anschrauben des Steckermoduls 2 an dem Umrichter 1 im erforderlichen Maße verschoben werden können. Mit den Rändelschrauben 16 wird der Kontakt 12 fest in den entsprechenden Gegenkontakt des Umrichters 1 gezogen.

Die Griffstücke 19 können aus jedem geeigneten Material bestehen, vorzugsweise aus Kunststoff. Er lässt sich einfach und kostengünstig auf den Stiften 22 aufbringen. An das Griffstück 19 schließen an beiden Enden Lagerstücke 37, 38 an, die vorteilhaft einstückig mit dem Griffstück 19 ausgebildet sind. Die Lagerstücke 37, 38 sind zylindrisch ausgebildet und haben einen kleineren Außendurchmesser als das Griffstück 19. Mit den Lagerstücken 37, 38 ist die Rändelschraube 16 innerhalb des Gehäuses 11 drehbar und verschiebbar gelagert. Das Gehäuse 11 hat für die Lagerstücke 37, 38 jeweils einen Lagerraum 39, 40, an dessen Wandung die Lagerstücke 37, 38 anliegen. Die Lagerräume 39, 40 sind so lang, dass die Rändelschraube 16 beim Verbinden des Steckermoduls 2 mit dem Umrichter 1 entsprechend weit verschoben werden kann. Das Griffstück 19 liegt im Bereich zwischen den beiden Lagerräumen 39, 40, deren Abstand voneinander größer ist als der maximale Verschiebeweg der Rändelschraube 16.

Die Rändelschraube 16 ist nicht nur über die Lagerstücke 37, 38, sondern auch über den Stift 22 im Gehäuse 11 gelagert. Dadurch wird sichergestellt, dass die Rändelschraube 16 zuverlässig innerhalb des Gehäuses 11 verschoben werden kann, wenn das Steckermodul 2 an den Umrichter 1 angeschlossen wird.

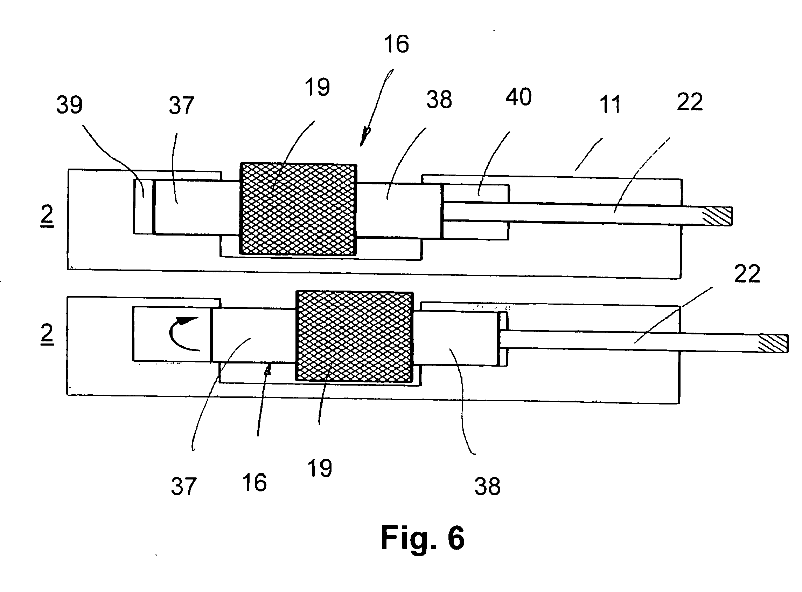

Fig. 6 zeigt zwei Stellungen der Rändelschraube 16, von denen die obere Darstellung die Ausgangslage der Rändelschraube vor dem Befestigen am Umrichter 1 und die untere Darstellung die Lage der Rändelschraube 16 zeigt, wenn das Steckermodul 2 mit dem Umrichter 1 verbunden ist.

Das Gehäuse 11 ist vorteilhaft zweiteilig ausgebildet. Die Trennebene 24 der beiden Gehäuseteile ist in Fig. 5 durch eine gestrichelte Linie angegeben. Die zweiteilige Ausbildung des Gehäuses 11 ermöglicht es, die noch zu beschreibenden Bestandteile problemlos im Gehäuse 11 montieren zu können. Die beiden Gehäuseteile 25, 26 können unlösbar, aber auch lösbar miteinander verbunden sein. Die lösbare Verbindung hat den Vorteil, dass eventuell beschädigte oder ausgefallene Bauteile einfach ausgewechselt werden können.

Im Gehäuse 11 ist wenigstens ein Energiespeicher 27 untergebracht, der im Ausführungsbeispiel eine Batterie ist. Sie ist über eine Anschlussleitung 28 an einen Anschluss 29 angeschlossen, der als Stecker oder als Buchse ausgebildet sein kann und auf einer (nicht dargestellten) Leiterplatte vorgesehen ist.

Als Energiespeicher wird eine solche Batterie 27 eingesetzt, die eine lange Lebensdauer hat. Als solche Batterien bieten sich Li-ION-Batterien an, die sich dadurch auszeichnen, dass sie sich nur sehr langsam entladen.

Als Energiespeicher 27 kann auch ein Akku verwendet werden. Er lässt sich aufladen, wenn seine Leistung abnimmt. In diesem Falle ist am Gehäuse 11 ein von außen erreichbarer Anschluss vorgesehen, damit der Akku über ein entsprechendes Ladekabel vom Stromnetz aus geladen werden kann.

Im Gehäuse 11 ist weiter wenigstens ein Kurzzeit-Energiespeicher 30 untergebracht. Er ist vorteilhaft ein Doppelschicht-Kondensator ("Gold Cap"), der eine lange Lebensdauer hat. Solche Kondensatoren sind bekannt und werden aus diesem Grunde auch nicht näher beschrieben. Der Kondensator 30 eignet sich wegen seiner hohen Kapazität insbesondere als Überbrückungsspannungsversorgung.

Auch der Energiespeicher 30 sitzt auf der Leiterplatine. Auf ihr sind auch die weiteren Bauteile angeordnet, mit denen die Leitungsverbindung vom Umrichter 1 zur Last 7 über das Encoder-Kabel 4 hergestellt wird.

Anhand von Fig. 4 wird beispielhaft eine Schaltung beschrieben, die die elektrische Verbindung zwischen dem Steckermodul 2 und dem Umrichter 1 bzw. der Last 7 ermöglicht. Der Energiespeicher 27 ist parallel zum Energiespeicher 30 geschaltet. In der Plusleitung 31 vom Energiespeicher 27 zum Energiespeicher 30 liegt eine Diode 32, die den Strom bei eingestecktem Stecker 29 vom Energiespeicher 27 zum Energiespeicher 30 durchlässt. Über den Encoder-Stecker 5 erfolgt die Verbindung zu einer Auswerteelektronik 33, die im Encoder 6 (Fig. 2) untergebracht ist.

Die Steckverbindung zwischen dem Steckermodul 2 und dem Umrichter 1 ist durch eine Leitung 34 mit Schalter 35 symbolisiert. Wird das Steckermodul 2 vom Umrichter 1 abgezogen, um beispielsweise einen Umrichterwechsel vorzunehmen, dann entspricht dies dem Öffnen des Schalters 35.

Der Einsatz des Steckermoduls 2 ermöglicht es, in einfacher Weise sicherzustellen, dass über eine lange Einsatzdauer hinweg die Zahl der Umdrehungen eines Multiturn-Encoders 6 gespeichert werden können, ohne dass ständig eine externe Strom/Spannungsversorgung erforderlich ist. Der Energiespeicher 27 im Steckermodul 2 stellt sicher, dass die vom Multiturn-Encoder 6 gelieferten Werte über einen langen Zeitraum hinweg gespeichert bleiben. Der Energiespeicher 27 in der vorteilhaften Ausbildung einer Batterie ist für einen 10-Jahres-Betrieb ausgelegt, wobei davon ausgegangen wird, dass der Encoder 6 fünf Jahre ausgeschaltet ist.

Der Encoder 6 kann selbstverständlich auch ein Singleturn-Encoder sein, mit dem nur jeweils eine Umdrehung der Motorwelle 8 erfasst wird.

Bei Einsatz des Steckermoduls 2 können die bestehenden Kabel 4 weiter verwendet werden. Auch ist es bei Einsatz des Steckermoduls 2 nicht erforderlich, angepasste Umrichter 1 zu verwenden. Es können die bestehenden Umrichter eingesetzt werden.

Bei einem Umrichterwechsel ist gewährleistet, dass die vom Encoder 6 gelieferten Werte gespeichert bleiben. Bei einem solchen Umrichterwechsel wird der Schalter 35 geöffnet, so dass der entsprechende Umrichter 1 gewechselt werden kann. Der Energiespeicher 30 stellt sicher, dass während dieser Wechselzeit die gespeicherten Encoderwerte behalten werden.

Das Steckermodul 2 ist kompakt ausgebildet und kann darum auch bei beengten Platzverhältnissen eingesetzt werden.

Bei einem notwendigen Wechsel des Energiespeichers 27 gewährleistet der Energiespeicher 30, dass die gespeicherten Werte nicht verloren gehen. Der Energiespeicher 30 in Form des Doppelschicht-Kondensators überbrückt die Wechselzeit beim Austausch des Energiespeichers 27. Der Energiespeicher 30 hat eine ausreichend hohe Kapazität, die auch einen längeren Zeitraum für einen Batteriewechsel überbrücken kann.

Da die Energiespeicher 27, 30 im Steckermodul 2 untergebracht und dieses über das Encoder-Kabel 4 mit dem Encoder 6 verbunden ist, besteht in vorteilhafter Weise die Möglichkeit, den Energiespeicher 27, 30 ausreichend weit entfernt vom Encoder 6 bzw. der Last 7 vorzusehen. Im Bereich der Last 7 treten im Einsatz teilweise hohe Temperaturen oder Erschütterungen auf, die sich wegen der räumlichen Entfernung nicht nachteilig auf die Energiespeicher 27, 30 im Steckermodul 2 auswirken. Auch das Auftreten von Schmutz im Bereich des Motors 7 wirkt sich somit nicht mehr nachteilig auf die Energiespeicher 27, 30 aus.

Damit ein Wechsel des Energiespeichers 27 einfach möglich ist, ist das Gehäuse 11 mit einem Verschluss 36 versehen (Fig. 5), der im Ausführungsbeispiel in der Gehäuseoberseite 20 vorgesehen ist. Je nach Ausbildung des Steckermoduls 2 kann der Verschluss 36 auch an einer anderen Stelle des Gehäuses 11 vorgesehen sein. Vorteilhaft ist der Verschluss 36 ein Deckel, der lösbar am Gehäuse 11 angeordnet ist und sich vorteilhaft ohne Zuhilfenahme eines Werkzeuges öffnen und schließen lässt.

Bei der Montage muss eine bestimmte Reihenfolge beim Zusammenstecken der verschiedenen Stecker und Kontakte nicht eingehalten werden. Dies erleichtert die Montage wesentlich.

Im bevorzugten Ausführungsbeispiel ist das Steckermodul 2 eine eigenständige Einheit, die lösbar mit dem Encoder-Kabel 4 verbunden werden kann. Es ist aber auch möglich, dass das Steckermodul 2 mit dem Encoder-Kabel 4 eine Einheit bildet. Dann hat das Steckermodul 2 nur den Kontakt 12, mit dem es an den Umrichter 1 angeschlossen werden kann.

Das Steckermodul 2 kann für Singleturn- und für Multiturn-Encoder eingesetzt werden. Bei einem Singleturn-Encoder ist der Energiespeicher 27 nicht in Funktion, da solche Encoder nur eine einzige Umdrehung der Motorwelle 8 erfassen. Bei einem Multiturn-Encoder 6 hingegen wird die Zahl der Umdrehungen der Motorwelle 8 erfasst und gespeichert. In diesem Falle ist der Energiespeicher 27 in der beschriebenen Weise wirksam.

## Patentansprüche

1. Aufnahme für einen Langzeit-Energiespeicher (27) eines Encoders (6), mit einem Gehäuse (11), in dem der Langzeit-Energiespeicher (27) untergebracht ist und das eine erste Schnittstelle (12) aufweist,
**dadurch gekennzeichnet, dass** die Aufnahme ein Steckermodul (2) ist, in dem zum Anschluss der ersten Schnittstelle (12) und zur Befestigung des Steckermoduls (2) an einem Umrichter (1) zwei Rändelschrauben (16) untergebracht sind, mit denen die erste Schnittstelle (12) in einen Gegenkontakt des Umrichters (1) gezogen wird, und dass das Steckermodul (2) eine zweite encoderseitige Schnittstelle (13) aufweist.

2. Aufnahme nach Anspruch 1,
**dadurch gekennzeichnet, dass** die encoderseitige Schnittstelle (13) für den Anschluss eines Encoderkabels (4) vorgesehen ist.

3. Aufnahme nach Anspruch 1 oder 2,
**dadurch gekennzeichnet, dass** der Langzeit-Energiespeicher (27) eine Batterie oder ein Akku ist.

4. Aufnahme nach einem der Ansprüche 1 bis 3,
**dadurch gekennzeichnet, dass** das Steckermodul (2) wenigstens einen Kurzzeit-Energiespeicher (30) aufweist.

5. Aufnahme nach Anspruch 4,
**dadurch gekennzeichnet, dass** der Langzeit-Energiespeicher (27) und der Kurzzeit-Energiespeicher (30) parallel geschaltet sind.

6. Aufnahme nach Anspruch 4 oder 5,
**dadurch gekennzeichnet, dass** der Kurzzeit-Energiespeicher (30) ein Kondensator ist, vorzugsweise ein Doppelschicht-Kondensator.

7. Aufnahme, nach einem der Ansprüche 1 bis 6,
**dadurch gekennzeichnet, dass** die Rändelschraube (16) ein Griffstück (19) hat, das innerhalb des Steckermoduls (2) angeordnet ist und teilweise aus dem Gehäuse (11) des Steckermoduls (2) ragt.

8. Aufnahme nach Anspruch 7,
**dadurch gekennzeichnet, dass** das Griffstück (19) über wenigstens zwei, vorzugsweise über drei Gehäuseseiten (17, 18, 20, 21) vorsteht.

9. Aufnahme nach Anspruch 7 oder 8,
**dadurch gekennzeichnet, dass** das Griffstück (19) einen Außendurchmesser hat, der mindestens doppelt so groß ist wie der Außendurchmesser eines Stiftes (22), auf dem das Griffstück (19) sitzt und der das Gewinde aufweist.

10. Aufnahme nach einem der Ansprüche 1 bis 9,
**dadurch gekennzeichnet, dass** der Langzeit-Energiespeicher (27) tauschbar ist, ohne dass die gespeicherten Werte verloren gehen.

## Claims

1. A holder for a long-term energy storage system (27) of an encoder (6), with a housing (11) in which the long-term energy storage system (27) is accommodated, and which has a first interface (12),
**characterised in that**, the holder is a connector module (2), in which, for purposes of connecting the first interface (12), and for purposes of fastening the connector modules (2) to a converter (1), two knurled screws (16) are accommodated, with which the first interface (12) is pulled into a counter-contact of the converter (1), and **in that** the connector module (2) has a second encoder-side interface (13).

2. The holder in accordance with Claim 1,
**characterised in that**, the encoder-side interface (13) is provided for the connection of an encoder cable (4).

3. The holder in accordance with Claim 1 or 2,
**characterised in that**, the long-term energy storage system (27) is a battery or an accumulator.

4. The holder in accordance with one of the Claims 1 to 3,
**characterised in that**, the connector module (2) has at least one short-term energy storage system (30).

5. The holder in accordance with Claim 4,
**characterised in that**, the long-term energy storage system (27) and the short-term energy storage system (30) are electrically connected in parallel.

6. The holder in accordance with Claim 4 or 5,
**characterised in that**, the short-term energy storage system (30) is a capacitor, preferably a double-layered capacitor.

7. The holder in accordance with one of the Claims 1 to 6,
**characterised in that**, the knurled screw (16) has a grip section (19), which is arranged within the connector module (2), and partially projects out of the housing (11) of the connector module (2).

8. The holder in accordance with Claim 7,
**characterised in that**, the grip section (19) protrudes beyond at least two, preferably beyond three, sides of the housing (17, 18, 20, 21).

9. The holder in accordance with Claim 7 or 8,
**characterised in that**, the grip section (19) has an outer diameter that is at least twice as large as the outer diameter of a pin (22), on which the grip section (19) sits, and which has the thread.

10. The holder in accordance with one of the Claims 1 to 9,
**characterised in that**, the long-term energy storage system (27) can be replaced, without the loss of the stored values.

## Revendications

1. Logement pour un accumulateur d'énergie longue durée (27) d'un encodeur (6), avec un boîtier (11) dans lequel est hébergé l'accumulateur d'énergie longue durée (27) et qui présente une première interface (12),
**caractérisé en ce que** le logement est un module de prise (2) dans lequel, pour le raccordement de la première interface (12) et pour la fixation du module de prise (2) sur un convertisseur (1), deux vis moletées (16) sont hébergées, grâce auxquelles la première interface (12) est tirée dans un contre-contact du convertisseur (1), et **en ce que** le module de prise (2) présente une seconde interface (13) côté encodeur.

2. Logement selon la revendication 1,
**caractérisé en ce que** l'interface (13) côté encodeur est prévue pour le raccordement d'un câble d'encodeur (4).

3. Logement selon la revendication 1 ou 2,
**caractérisé en ce que** l'accumulateur d'énergie longue durée (27) est une batterie ou un accumulateur.

4. Logement selon l'une des revendications 1 à 3,
**caractérisé en ce que** le module de prise (2) présente au moins un accumulateur d'énergie courte durée (30).

5. Logement selon la revendication 4,
**caractérisé en ce que** l'accumulateur d'énergie longue durée (27) et l'accumulateur d'énergie courte durée (30) sont couplés en parallèle.

6. Logement selon la revendication 4 ou 5,
**caractérisé en ce que** l'accumulateur d'énergie courte durée (30) est un condensateur, de préférence un condensateur à couche double.

7. Logement selon l'une des revendications 1 à 6,
**caractérisé en ce que** la vis moletée (16) a une partie de poignée (19), laquelle est disposée à l'intérieur du module de prise (2) et dépasse partiellement du boîtier (11) du module de prise (2).

8. Logement selon la revendication 7,
**caractérisé en ce que** la partie de poignée (19) est en saillie par rapport à au moins deux, de préférence trois côtés (17, 18, 20, 21) du boîtier.

9. Logement selon la revendication 7 ou 8,
**caractérisé en ce que** la partie de poignée (19) a un diamètre extérieur qui est au moins du double du diamètre extérieur d'une tige (22) sur laquelle la partie de poignée (19) est enfichée et qui présente le filetage.

10. Logement selon l'une des revendications 1 à 9,
**caractérisé en ce que** l'accumulateur d'énergie longue durée (27) est échangeable sans que les valeurs enregistrées soient perdues.
